# EUROPÄISCHE PATENTSCHRIFT

(11) **EP 3 580 291 B1**
(45) Veröffentlichungstag und Bekanntmachung des Hinweises auf die Patenterteilung: **06.01.2021**
(21) Anmeldenummer: 18704498.7
(22) Anmeldetag: 05.02.2018
(51) Int. Cl.: C09D 181/02, C08L 81/02, C08F 116/00

(54) **AUSHÄRTBARE VORLÄUFERBESCHICHTUNG, DARAUS HERGESTELLTE MIKROSTRUKTURIERTE OBERFLÄCHENBESCHICHTUNG UND VERFAHREN ZUR HERSTELLUNG EINER MIKROSTRUKTURIERTEN OBERFLÄCHENBESCHICHTUNG**
CURABLE PRECURSOR COATING, MICROSTRUCTURED SURFACE COATING PRODUCED THEREFROM, AND METHOD FOR PRODUCING A MICROSTRUCTURED SURFACE COATING
REVÊTEMENT PRÉCURSEUR DURCISSABLE, REVÊTEMENT DE SURFACE MICROSTRUCTURÉ RÉALISÉ À PARTIR DE CELUI-CI ET PROCÉDÉ DE FABRICATION D'UN REVÊTEMENT DE SURFACE MICROSTRUCTURÉ

(30) Priorität: 08.02.2017 DE 102017201990
(43) Veröffentlichungstag der Anmeldung: 18.12.2019
(73) Patentinhaber: Lufthansa Technik AG, 22335 Hamburg (DE)
(72) Erfinder: NEES, Dieter, 8160 Thannhausen (AT); STADLOBER, Barbara, 8044 Graz (AT); GÖTZ, Johannes, 8160 Mortantsch (AT); RUTTLOFF, Stephan, 8160 Weiz (AT)
(74) Vertreter: Glawe, Delfs, Moll
(86) Internationale Anmeldenummer: PCT/EP2018/052746
(87) Internationale Veröffentlichungsnummer: WO 2018/146030

(56) Entgegenhaltungen:
- EP-A1- 2 502 942
- WO-A1-2016/090395
- US-A1- 2007 021 521

## Beschreibung

Die vorliegende Erfindung betrifft eine aushärtbare Vorläuferbeschichtung, eine daraus hergestellte mikrostrukturierte Oberflächenbeschichtung und ein Verfahren zur Herstellung einer mikrostrukturierten Oberflächenbeschichtung. Eine solche mikrostrukturierte Oberflächenbeschichtung wird durch Strukturieren und Aushärten einer entsprechenden Vorläuferbeschichtung auf einem Substrat erhalten.

Mikrostrukturierte Oberflächen sind für eine Vielzahl von Anwendungen vorteilhaft. Bekannte Beispiele sind sogenannte Lotus-Oberflächen, die Verschmutzungen abweisen oder strömungsgünstige Riblet-Strukturen auf Oberflächen von relativ zu einem Fluid oder sonstigen Medium bewegten Teilen, beispielsweise Außenflächen von Luftfahrzeugen, Fahrzeugen, Schiffen oder Rotorblättern von Windkraftanlagen. Ebenfalls Verwendung finden solche Strukturen beispielsweise an Innenflächen von Pipelines.

Zur Herstellung solcher Strukturen ist die sogenannte Nanoimprintlithographie (NIL) geeignet. Bei NIL-Prozessen wird ein Polymer durch mechanisches Prägen strukturiert. Es handelt sich hierbei um ein hoch präzises Prägeverfahren, bei dem es möglich ist, auch kleinste Strukturen auf einem entsprechenden Substrat auszuformen.

Aus EP 2 590 801 B1 ist eine mikro- und/oder nanostrukturierte Oberfläche bekannt, wobei die Oberfläche ein Polymermaterial umfasst, das durch Aushärten eines UV- oder elektronenstrahlhärtbaren Vorläufers erhalten wird. Der acrylathaltige Vorläufer umfasst eine oder mehrere vernetzbare Oligomer- und/oder Polymerverbindungen, mindestens einen reaktiven Verdünner, hydrophobe Zusatzstoffe und mindestens einen Photoinitiator. Des Weiteren sind dualhärtende polymerisierbare Zusammensetzungen und härtbare Thiol-En-Zusammensetzungen umfassend Urethan(meth)acrylat-Monomere und Oligomere aus der EP 2 502 942 A1 und der US 2007/0021521 bekannt.

In der WO 2016/090395 A1 wird eine Präpolymerzusammensetzung offenbart durch die thiolhaltige Prägelacke erhalten werden. Die thiolhaltigen Monomere der Zusammensetzung sind dabei für den Verlauf der Polymerisationsreaktion essenziell. Im Vergleich zu entsprechenden reinen Acrylatsystemen tragen die in der WO 2016/090395 A1 beschriebenen thiolhaltigen Zusammensetzungen zu einer insgesamt verbesserten Polymerisation sowie zu einer präziseren Abformung im Prägeprozess bei.

Diesen bekannten thiolhaltigen Prägelacken fehlt es an einer ausreichenden Haftung insbesondere auf thermoplastischen Substratoberflächen. Die übliche zur Haftvermittlung angewendete Corona-Vorbehandlung bewirkt bei diesen thiolhaltigen Prägelacken keine hinreichende Haftverbesserung. Eine zuverlässige Haftung des Prägelackes auf der Substratoberfläche ist jedoch die Grundvoraussetzung für stabile UV-NIL-geprägte mikrostrukturierte Riblet-Oberflächen, insbesondere auch für stabile UV-NIL-geprägte mikrostrukturierte Riblet-Folienoberflächen.

Der vorliegenden Erfindung liegt daher die Aufgabe zugrunde, eine aushärtbare Vorläuferbeschichtung, eine daraus hergestellte mikrostrukturierte Oberflächenbeschichtung und ein Verfahren der eingangs genannten Art zu schaffen, die eine verbesserte Adhäsion von thiolhaltigen (UV-)NIL-Prägelacken auf thermoplastischen Substraten ermöglichen. Insbesondere soll hierdurch auch ein verbessertes (UV-)NIL-Verfahren ermöglicht werden, das die Herstellung einer thiolhaltigen, bewitterungsstabilen und abrasionsfesten Riblet-Folie, insbesondere zur Reduzierung der Strömungsreibung von Verkehrsflugzeugen, erlaubt.

Die Erfindung löst diese Aufgabe durch die erfindungsgemäße aushärtbare Vorläuferbeschichtung, die folgendes umfasst:
a) eine erste auf einem Substrat angeordnete Schicht umfassend wenigstens ein Monomer ausgewählt aus der Gruppe bestehend aus Acrylat, Methylacrylat, Vinylether und Allylether,und
b) eine zweite Schicht umfassend eine Zusammensetzung, die wenigstens eine vernetzbare Oligomer- und/oder Polymerverbindung und wenigstens ein thiolhaltiges Monomer umfasst.

Zunächst seien einige im Rahmen der Erfindung verwendete Begriffe erläutert.

Unter einer aushärtbaren Vorläuferbeschichtung ist im Rahmen der vorliegenden Erfindung eine Art Präpolymerbeschichtung zu verstehen, die als ein Zwischenprodukt erhalten wird. Erfindungsgemäß umfasst die aushärtbare Vorläuferbeschichtung eine erste Vorläuferschicht zur Haftvermittlung und eine vernetzbare (d. h. polymerisierbare) Zusammensetzung für einen Prägelack. Um zu dem endgültigen Produkt, einer mikrostrukturierten Oberflächenbeschichtung, zu gelangen, sind ausgehend von der Vorläuferbeschichtung mindestens zwei weiterer Bearbeitungsschritt erforderlich. Bei diesen Verfahrensschritten handelt es sich vorzugsweise um das Strukturieren (Prägen) und Aushärten der Vorläuferbeschichtung.

Die in der aushärtbaren Vorläuferbeschichtung verwendeten Monomere, Oligomer und/oder Polymere sind vorzugsweise UV-härtbar. Damit die Verbindungen UV-härtbar sind, sollte vorzugsweise immer eine nicht vollständig abreagierte C=C-Doppelbindung in dem Molekül vorhanden sein.

Erfindungsgemäß ist bevorzugt vorgesehen, dass es sich bei dem Substrat um ein Substratpolymer, noch bevorzugter um ein thermoplastisches Substratpolymer, wie beispielsweise ein PVC-Substrat, handelt. Weiter bevorzugt kann es sich bei dem Substrat um Folien, insbesondere thermoplastische Substratfolien handeln. Dies können beispielsweise PVC-Substratfolien sein. Solche PVC-Substratfolien sind dem Fachmann aus dem Stand der Technik geläufig und bedürfen daher keiner weiteren Erklärung. Ferner können in alternativen Ausführungsformen auch PE-und/oder PU-Folien als Substrat eingesetzt werden.

Erfindungsgemäß ist es bevorzugt, dass das wenigstens eine Monomer, ausgewählt aus der Gruppe bestehend aus Acrylat, Methylacrylat, Vinylether und Allylether, beispielsweise HDDA (Hexandioldiacrylat), DDDA (Decandioldiacrylat, PEGDA (Polyethylenglykoldiacrylat), TMPTA (Trimethylolpropantriacrylat) oder TMP(EO)xTA (ethoxyliertes Trimethyloltriacrylat) ist.

Bei einer bevorzugten Ausführungsform der Erfindung ist vorgesehen, dass die wenigstens eine vernetzbare Oligomer- und/oder Polymerverbindung ausgewählt ist aus der Gruppe bestehend aus Urethanacrylaten, Polyacrylaten, Polymethacrylaten, Epoxyacrylaten, Silikonacrylaten, Polyesteracrylaten, Polyetheracrylaten und Mischungen hiervon.

Bei einer bevorzugten Variante der erfindungsgemäßen mikrostrukturierten Oberflächenbeschichtung ist vorgesehen, dass die wenigstens eine vernetzbare Oligomer- und/oder Polymerverbindung ein Urethan-Acrylat-Oligomer ist.

Bei einer Ausführungsform der Erfindung kann das thiolhaltige Monomer wenigstens zwei thiolhaltige Gruppen aufweisen und/oder ist ausgewählt aus der Gruppe bestehend aus 3-Mercaptopropionaten, 2-Mercaptoacetaten, Thioglykolaten und Alkyldithiolen. Besonders bevorzugte thiolhaltige Monomere sind beispielsweise GDMP (Glykoldi(3-mercaptopropionat)), TMPMP (Tri-methylolpropantri(3-mercaptopropionat)), PETMP (Pentaerythritoltetra(3-mercaptopropionat)) und TEMPIC (Tris[2-(3-mercaptopropionyloxy)ethyl]isocyanurat) .

Erfindungsgemäß ist bevorzugt, dass die wenigstens eine vernetzbare Oligomer- und/oder Polymerverbindung in einer Gesamtmenge von 1 bis 90 Gew.-%, insbesondere von 10 bis 50 Gew.-%, enthalten ist und/oder das wenigstens eine thiolhaltige Monomer in einer Gesamtmenge von 1 bis 50 Gew.-%,insbesondere von 5 bis 30 Gew.-%, enthalten ist, jeweils auf Basis der Gesamtmenge der Zusammensetzung der zweiten Schicht.

Erfindungsgemäß ist es ferner bevorzugt, dass die wenigstens eine vernetzbare Oligomer- und/oder Polymerverbindung und/oder das thiolhaltige Monomer mindestens zwei funktionelle Gruppen (bifunktional), besonderes bevorzugt mehr als zwei funktionelle Gruppen (multifunktional), aufweisen.

Erfindungsgemäß kann es vorgesehen sein, dass die erste Schicht und/oder die Zusammensetzung der zweiten Schicht weiter Bestandteile, ausgewählt aus der Gruppe bestehend aus Antihaftadditiven und Photoinitiatoren, umfassen.

Bevorzugte Antihaftadditive sind ausgewählt aus der Gruppe bestehend aus Alkyl-(Meth-)Acrylaten, Poly-Siloxan(Meth-)Acrylaten, Perfluoralkyl-(Meth-)Acrylaten, Perfluorpolyether-(Meth- )Acrylaten, Alkyl-Vinylethern, Poly-Siloxan-Vinylethern, Perfluoralkyl-Vinylethern und Perfluorpolyether-Vinylethern.

Bevorzugte Photoinitiatoren sind ausgewählt aus der Gruppe bestehend aus Thioxanthonen, Ketosulfonen, (Alkyl-)-Benzoyl-Phenyl-Phosphinoxiden, 1-Hydroxyalkylphenylketonen und 2,2-Dimethoxy-1,2-diphenylethan-1-on.

Die Erfindung hat den Vorteil, dass die erste Schicht als eine Art Vorbeschichtung dient. Bei den beanspruchten Monomeren der ersten Schicht handelt es sich um Reaktivverdünner, die aufgrund ihrer guten Löslichkeit in das Substrat diffundieren. Die in die Substratoberfläche diffundierten Monomere nehmen an der nachfolgenden Polymerisation beim Prägeprozess teil und wirken als eine Verankerung zwischen dem Substrat und der als zweiten Schicht aufgebrachten Zusammensetzung. Auf diese Weise werden die nach der Härtung erhaltenen thiolhaltigen Prägelacke auf der thermoplastischen Substratsfolie verankert und zeigen eine signifikant stärkere Haftung auf dem Substrat als ohne Monomer-Vorbeschichtung. Die Verwendung des Reaktivverdünners in einer ersten Schicht (Vorbeschichtung) verhindert zusätzlich auch das Problem der Herabsetzung der Elastizität der eigentlichen Polymerzusammensetzung durch den Reaktivverdünner.

Gegenstand der Erfindung ist ferner eine mikrostrukturierte Oberflächenbeschichtung, die durch Strukturieren und Aushärten der erfindungsgemäßen aushärtbaren Vorläuferbeschichtung erhalten wird.

Mikrostrukturierte Oberflächen weisen eine Struktur bzw. Topographie mit Erhebungen bzw. Vertiefungen auf, deren Abstand voneinander und Tiefe bzw. Höhe im Submillimeterbereich liegen. Bevorzugt liegen Abstand zueinander und Tiefe im Bereich 0,5 bis 100 µm, weiter vorzugsweise 0,5 bis 50 µm.

Erfindungsgemäß ist es vorgesehen, dass das Aushärten der Oberflächenbeschichtung thermisch, mit Licht und/oder mit UV-Strahlung erfolgt. Es können jedoch auch alle übrigen dem Fachmann bekannten Aushärtungsmechanismen verwendet werden. Gegebenenfalls kann zusätzlich zur Photo-Härtung eine thermische Aushärtung hinzutreten, insbesondere bei sogenannten Dual-Cure-Systemen. Das Aushärten der aufgebrachten Schichten mit UV-Strahlung ist besonders bevorzugt.

Die erfindungsgemäßen Oberflächenbeschichtungen werden vorzugsweise als Prägelacke verwendeten. Die Prägelacke sind zum Einsatz in Rolle-zu-Rolle, Rolle-zu-Platte oder Blatt-zu-Blatt-Verfahren geeignet. Besonders bevorzugt werden die Prägelacke in UV-NIL-Rolle-zu-Rolle-Verfahren eingesetzt und weisen sehr gute Abformungseigenschaften auf.

Gegenstand der Erfindung ist ferner ein Verfahren zur Herstellung der erfindungsgemäßen mikrostrukturierten Oberflächenbeschichtung, gekennzeichnet durch die folgenden Schritte:
a) Bereitstellen eines Substrates,
b) Aufbringen einer ersten Schicht auf das Substrat, wobei die erste Schicht wenigstens ein Monomer ausgewählt aus der Gruppe bestehend aus Acrylat, Methylacrylat, Vinylether und Allylether umfasst,
c) Aufbringen einer zweiten Schicht umfassend eine Zusammensetzung, die wenigstens eine vernetzbare Oligomer- und/oder Polymerverbindung und wenigstens ein thiolhaltiges Monomer umfasst, und
d) Strukturieren und Aushärten der aufgebrachten Schichten.

Bei einer bevorzugten Ausführungsform der Erfindung kann das Substrat vor dem Aufbringen der ersten Schicht zusätzlich einer Corona-Vorbehandlung unterzogen werden. Hierdurch wird eine weitere Haftverbesserung auf dem Substrat erzielt wird.

Erfindungsgemäß ist es bevorzugt vorgesehen, dass das Aufbringen der ersten Schicht auf das Substrat mittels Gravurdruck erfolgt. Es können jedoch auch alle übrigen dem Fachmann bekannten Mechanismen zum Aufbringen der Schicht auf das Substrat verwendet werden.

Das Aushärten der aufgebrachten Oberflächenbeschichtung erfolgt in dem erfindungsgemäßen Verfahren bevorzugt mit den bereits oben genannten Aushärtungsmechanismen.

Erfindungsgemäß ist es bevorzugt, dass das Aushärten im Schritt d) ein vollständiges Aushärten der aufgebrachten Schichten ist.

Bei einer weiteren Variante der Erfindung kann vor dem Aufbringen der zweiten Schicht ein teilweises Aushärten der ersten Schicht erfolgen.

Ein teilweises Aushärten meint im Rahmen der Erfindung dabei, dass durch einen niedrigen Gehalt an Photoinitiator und/oder eine geringe Lichtdosis sichergestellt wird, dass der Polymerisationsumsatz des mit der ersten Schicht aufgetragenen Monomers unvollständig bleibt. Vorzugsweise bleiben bei dem teilweisen Aushärten mindestens 50%, noch bevorzugter 70%, der reaktiven Gruppen des Monomers erhalten. Dieses ermöglicht in einem ersten Schritt die Verankerung einer haftvermittelnden, teilweise polymerisierten Monomerschicht mit dem Substrat. Weiter wird hierdurch auch gewährleistet, dass durch einen möglichst geringen Grad der Vorpolymerisation der in die Substratoberfläche eingedrungenen Monomere möglichst viele photoreaktive Gruppen zur Haftvermittlung mit der nachfolgend zweiten Schicht zur Verfügung stehen. Nach Aufbringen der zweiten Schicht erfolgt dann in Schritt d) ein erneutes Aushärten.

Alternativ oder zusätzlich kann vorgesehen sein, dass das Aufbringen der ersten und zweiten Schichten in einem Zeitabstand von 1 bis 60 Minuten, vorzugsweise 1 bis 20 Minuten, erfolgt.

Diese vorgenannten Alternativen sind erfindungsgemäß besonders vorteilhaft, da die gute Löslichkeit und hohe Diffusionsgeschwindigkeit des wenigstens einen Monomers der ersten Schicht in das Substrat nicht nur zu dessen Eindringen in die Substratoberfläche, sondern auch zu einer sehr raschen gleichmäßigen Verteilung in dem gesamten Substrat führt. Dieses hat eine Verarmung der Substratoberfläche an Monomer innerhalb von wenigen Minuten zur Folge und somit eine verschwindende haftvermittelnde Wirkung. Lösungen für diese Probleme sind sowohl das teilweise Aushärten der ersten Schicht, als auch das Aufbringen der ersten und zweiten Schichten in einem kurzen Zeitabstand. Letzteres erfordert vorzugsweise zwei direkt nacheinander angeordnete Beschichtungswerke in der UV-NIL-Anlage. Gegenstand der Erfindung ist zudem auch ein Flugzeug- oder Fahrzeugbauteil mit der erfindungsgemäßen mikrostrukturierte Oberflächenbeschichtung.

Ein weiterer Gegenstand der Erfindung ist die Verwendung der erfindungsgemäßen mikrostrukturierte Oberflächenbeschichtung als Prägelack.

Die Erfindung wird nun anhand einer vorteilhaften Ausführungsform unter Bezugnahme auf die beigefügten Zeichnungen beispielhaft beschrieben. Es zeigt:
- Figur 1:: eine erfindungsgemäße aushärtbare Vorläuferbeschichtung auf einem Substrat (10), umfassend eine erste Schicht (11) und eine zweite Schicht (12).
- Figur 2:: einen schematischen Ablauf einer bevorzugten Variante des erfindungsgemäßen Verfahrens zur Herstellung einer mikrostrukturierten Oberflächenbeschichtung.

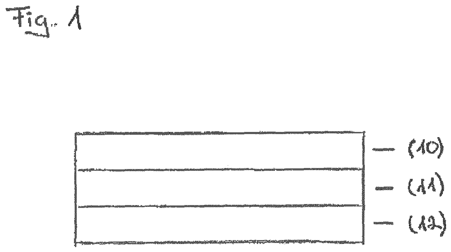

In Figur 1 ist eine erfindungsgemäße aushärtbare Vorläuferbeschichtung gezeigt, bei der die erste Schicht (11) umfassend wenigstens ein Monomer ausgewählt aus der Gruppe bestehend aus Acrylaten, Methylacrylaten, Vinylethern und Allylethern auf einem Substrat (10) angeordnet ist. Auf dieser ersten Schicht ist eine zweite Schicht (12) angeordnet, die eine Zusammensetzung mit wenigstens einer vernetzbaren Oligomer- und/oder Polymerverbindung und wenigstens einem thiolhaltigen Monomer umfasst. Durch Strukturieren (Prägen) und Aushärten der erfindungsgemäßen Vorläuferbeschichtung auf einem Substrat wird eine mikrostrukturierte Oberflächenbeschichtung erhalten.

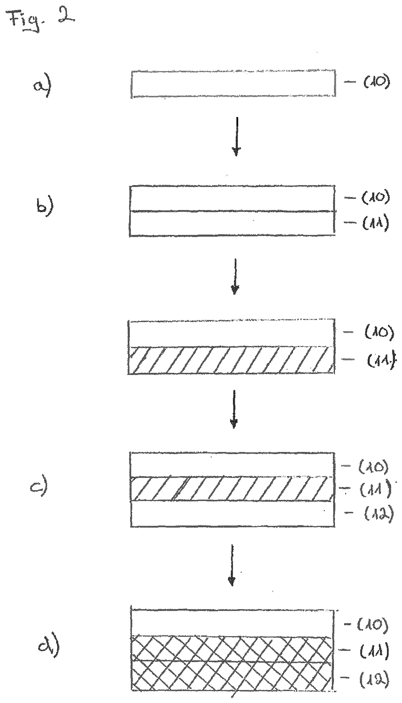

In Figur 2 ist der schematische Ablauf einer bevorzugten Variante des erfindungsgemäßen Verfahrens zur Herstellung einer mikrostrukturierten Oberflächenbeschichtung dargestellt, bei der vor dem Aufbringen der zweiten Schicht (12) ein teilweises Aushärten der ersten Schicht (11) erfolgt.

In einem ersten Schritt a) erfolgt die Bereitstellung des Substrates (10). In einem weiteren Schritt b) wird die erste Schicht (11) auf das Substrat (10) aufgebracht. In der vorliegenden Ausführungsform erfolgt nun zunächst ein teilweises Aushärten der ersten Schicht (11) vor dem Aufbringen der zweiten Schicht (12). Die in die Substratoberfläche diffundierten Monomere ausgewählt aus Acrylaten, Methylacrylaten, Vinylethern und Allylethern liegen sodann teilweise polymerisiert vor und wirken als eine Verankerung zwischen dem Substrat (10) und der ersten Schicht (11). In einem weiteren Schritt c) wird dann die zweite Schicht (12) aus thiolhaltiger Präpolymerzusammensetzung auf die erste Schicht (11) aufgebracht. Durch das vollständige Aushärten mittels UV-Strahlung wird der thiolhaltige Prägelack auf dem Substrat (10) verankert und zeigt eine signifikant stärkere Haftung auf dem Substrat (10) als ohne Monomer-Vorbeschichtung (11). Zudem erfolgt auch das Prägen der aufgebrachten Oberflächenbeschichtung in einem letzten Schritt d), wodurch die erfindungsgemäße mikrostrukturierte Oberflächenbeschichtung erhalten wird.

## Patentansprüche

1. Aushärtbare Vorläuferbeschichtung umfassend:
a) eine erste auf einem Substrat (10) angeordnete Schicht (11) umfassend wenigstens ein Monomer ausgewählt aus der Gruppe bestehend aus Acrylat, Methylacrylat, Vinylether und Allylether, und
b) eine zweite Schicht (12) umfassend eine Zusammensetzung, die wenigstens eine vernetzbare Oligomer- und/oder Polymerverbindung und wenigstens ein thiolhaltiges Monomer umfasst.

2. Aushärtbare Vorläuferbeschichtung nach Anspruch 1, **dadurch gekennzeichnet, dass** das wenigstens eine Monomer der ersten Schicht (11) HDDA oder TMPTA ist.

3. Aushärtbare Vorläuferbeschichtung nach einem der Ansprüche 1 oder 2, **dadurch gekennzeichnet, dass** die wenigstens eine Oligomer- und/oder Polymerverbindung ausgewählt ist aus der Gruppe bestehend aus Urethanacrylaten, Polyacrylaten, Polymethacrylaten, Epoxyacrylaten, Silikonacrylaten, Polyesteracrylaten, Polyetheracrylaten und Mischungen hiervon.

4. Aushärtbare Vorläuferbeschichtung nach einem der Ansprüche 1 bis 3, **dadurch gekennzeichnet, dass** die wenigstens eine vernetzbare Oligomer- und/oder Polymerverbindung ein Urethan-Acrylat-Oligomer ist.

5. Aushärtbare Vorläuferbeschichtung nach einem der Ansprüche 1 bis 4, **dadurch gekennzeichnet, dass** das thiolhaltige Monomer wenigstens zwei thiolhaltige Gruppen aufweist und/oder ausgewählt ist aus der Gruppe bestehend aus 3-Mercaptopropionaten, 2-Mercaptoacetaten, Thioglykolaten und Alkyldithiolen.

6. Mikrostrukturierte Oberflächenbeschichtung, die durch Strukturieren und Aushärten der aushärtbaren Vorläuferbeschichtung gemäß einem der Ansprüche 1 bis 5 erhalten wird.

7. Verfahren zur Herstellung einer mikrostrukturierten Oberflächenbeschichtung, **gekennzeichnet durch** die folgende Schritte:
a) Bereitstellen eines Substrates (10),
b) Aufbringen einer ersten Schicht (11) auf das Substrat (10), wobei die erste Schicht wenigstens ein Monomer ausgewählt aus der Gruppe bestehend aus Acrylat, Methylacrylat, Vinylether und Allylether umfasst,
c) Aufbringen einer zweiten Schicht (12) umfassend eine Zusammensetzung, die wenigstens eine vernetzbare Oligomer- und/oder Polymerverbindung und wenigstens ein thiolhaltiges Monomer umfasst, und
d) Strukturieren und Aushärten der aufgebrachten Schichten (11, 12).

8. Verfahren nach Anspruch 7, **dadurch gekennzeichnet, dass** vor dem Aufbringen der zweiten Schicht (12) ein teilweises Aushärten der ersten Schicht (11) erfolgt.

9. Verfahren nach einem der Ansprüche 7 oder 8, **dadurch gekennzeichnet, dass** das Aufbringen der ersten und zweiten Schichten (11, 12) in einem Zeitabstand von 1 bis 60 Minuten erfolgt.

10. Flug- oder Fahrzeugbauteil mit einer mikrostrukturierten Oberflächenbeschichtung gemäß Anspruch 6.

11. Verwendung der mikrostrukturierten Oberfläche gemäß Anspruch 6 als Prägelack.

## Claims

1. Curable precursor coating comprising:
a) a first layer (11) disposed on a substrate (10) and comprising at least one monomer selected from the group consisting of acrylate, methylacrylate, vinyl ether and allyl ether, and
b) a second layer (12), comprising a composition which comprises at least one crosslinkable oligomer and/or polymer compound and at least one thiol-containing monomer.

2. Curable precursor coating according to Claim 1, **characterized in that** the at least one monomer of the first layer (11) is HDDA or TMPTA.

3. Curable precursor coating according to either of Claims 1 and 2, **characterized in that** the at least one oligomer and/or polymer compound is selected from the group consisting of urethane acrylates, polyacrylates, polymethacrylates, epoxy acrylates, silicone acrylates, polyester acrylates, polyether acrylates and mixtures thereof.

4. Curable precursor coating according to any of Claims 1 to 3, **characterized in that** the at least one crosslinkable oligomer and/or polymer compound is a urethane acrylate oligomer.

5. Curable precursor coating according to any of Claims 1 to 4, **characterized in that** the thiol-containing monomer has at least two thiol-containing groups and/or is selected from the group consisting of 3-mercaptopropionates, 2-mercaptoacetates, thioglycolates and alkyldithiols.

6. Microstructured surface coating obtained by structuring and curing the curable precursor coating according to any of Claims 1 to 5.

7. Method for producing a microstructured surface coating, **characterized by** the following steps:
a) providing a substrate (10),
b) applying a first layer (11) to the substrate (10), the first layer comprising at least one monomer selected from the group consisting of acrylate, methylacrylate, vinyl ether and allyl ether,
c) applying a second layer (12), comprising a composition which comprises at least one crosslinkable oligomer and/or polymer compound and at least one thiol-containing monomer, and
d) structuring and curing the applied layers (11, 12).

8. Method according to Claim 7, **characterized in that** the applying of the second layer (12) is preceded by partial curing of the first layer (11).

9. Method according to either of Claims 7 and 8, **characterized in that** the applying of the first and second layers (11, 12) takes place in a time interval of 1 to 60 minutes.

10. Aircraft or vehicle component having a microstructured surface coating according to Claim 6.

11. Use of the microstructured surface according to Claim 6 as embossing varnish.

## Revendications

1. Revêtement précurseur durcissable comprenant :
a) une première couche (11) disposée sur un substrat (10) comprenant au moins un monomère choisi dans le groupe constitué par un acrylate, un méthylacrylate, un éther de vinyle et un éther d'allyle, et
b) une deuxième couche (12) comprenant une composition qui comprend au moins un composé réticulable oligomérique et/ou polymérique et au moins un monomère contenant un thiol.

2. Revêtement précurseur durcissable selon la revendication 1, **caractérisé en ce que** l'au moins un monomère de la première couche (11) est l'HDDA ou le TMPTA.

3. Revêtement précurseur durcissable selon l'une quelconque des revendications 1 et 2, **caractérisé en ce que** l'au moins un composé oligomérique et/ou polymérique est choisi dans le groupe constitué par des acrylates d'uréthane, des polyacrylates, des polyméthacrylates, des acrylates d'époxy, des acrylates de silicone, des acrylates de polyester, des acrylates de polyéther et des mélanges correspondants.

4. Revêtement précurseur durcissable selon l'une quelconque des revendications 1 à 3, **caractérisé en ce que** l'au moins un composé réticulable oligomérique et/ou polymérique est un oligomère d'acrylate d'uréthane.

5. Revêtement précurseur durcissable selon l'une quelconque des revendications 1 à 4, **caractérisé en ce que** le monomère contenant un thiol présente au moins deux groupes contenant un thiol et/ou est choisi dans le groupe constitué par des 3-mercaptopropionates, des 2-mercaptoacétates, des thioglycolates et des alkyldithiols.

6. Revêtement de surface microstructuré qui est obtenu par la structuration et le durcissement du revêtement précurseur durcissable selon l'une quelconque des revendications 1 à 5.

7. Procédé pour la préparation d'un revêtement de surface microstructuré, **caractérisé par** les étapes suivantes:
a) mise à disposition d'un substrat (10),
b) application d'une première couche (11) sur le substrat (10), la première couche comprenant au moins un monomère choisi dans le groupe constitué par un acrylate, un méthylacrylate, un éther de vinyle et un éther d'allyle,
c) application d'une deuxième couche (12) comprenant une composition qui comprend au moins un composé réticulable oligomérique et/ou polymérique et au moins un monomère contenant un thiol, et
d) structuration et durcissement des couches appliquées (11, 12).

8. Procédé selon la revendication 7, **caractérisé en ce qu'**avant l'application de la deuxième couche (12), un durcissement partiel de la première couche (11) est réalisé.

9. Procédé selon l'une quelconque des revendications 7 et 8, **caractérisé en ce que** l'application des première et deuxième couches (11, 12) est réalisée dans un intervalle de temps de 1 à 60 minutes.

10. Composant d'aéronef ou de véhicule comportant un revêtement de surface microstructuré selon la revendication 6.

11. Utilisation de la surface microstructurée selon la revendication 6 en tant que laque gaufrée.
